# FASCICULE DE BREVET EUROPEEN

(11) **EP 4 406 851 B1**
(45) Date de publication et mention de la délivrance du brevet: **01.10.2025**
(21) Numéro de dépôt: 24151106.2
(22) Date de dépôt: 10.01.2024
(51) Int. Cl.: B64D 35/08, B64D 27/24

(54) **ENSEMBLE DE PROPULSION ÉLECTRIQUE COMPORTANT PLUSIEURS MOTEURS ÉLECTRIQUES ACCOUPLÉS À UN MÊME ARBRE D'ENTRÉE D'UN SYSTÈME DE TRANSMISSION, AÉRONEF COMPORTANT AU MOINS UN TEL ENSEMBLE DE PROPULSION ÉLECTRIQUE**
ELEKTRISCHE ANTRIEBSANORDNUNG MIT MEHREREN AN EINE EINZIGE EINGANGSWELLE EINES ÜBERTRAGUNGSSYSTEMS GEKOPPELTEN ELEKTROMOTOREN, LUFTFAHRZEUG MIT MINDESTENS EINER SOLCHEN ELEKTRISCHEN ANTRIEBSANORDNUNG
ELECTRIC PROPULSION ASSEMBLY COMPRISING A PLURALITY OF ELECTRIC MOTORS COUPLED TO A SAME INPUT SHAFT OF A TRANSMISSION SYSTEM, AIRCRAFT COMPRISING AT LEAST ONE SUCH ELECTRIC PROPULSION ASSEMBLY

(30) Priorité: 30.01.2023 FR 2300838
(43) Date de publication de la demande: 31.07.2024
(73) Titulaire: Airbus SAS, 31700 Blagnac Cedex (FR); AIRBUS OPERATIONS (S.A.S.), 31060 Toulouse (FR)
(72) Inventeur: ALLIAS, Jean-François, 31060 Toulouse (FR); MARIOTTO, Damien, 13725 Marignane Cedex (FR)
(74) Mandataire: Fantin, Laurent

(56) Documents cités:
- EP-A1- 3 875 375
- JP-A- S 621 690
- US-A1- 2022 120 261
- US-A1- 2023 021 085

## Description

La présente demande se rapporte à un ensemble de propulsion électrique comportant plusieurs moteurs électriques accouplés à un même arbre d'entrée d'un système de transmission ainsi qu'à un aéronef comportant au moins un tel ensemble de propulsion électrique.

Selon un mode de réalisation visible sur la figure 1, un aéronef 10 comprend un fuselage 12, au moins une voilure 14 reliée au fuselage 12 ainsi que des ensembles de propulsion électriques 16 reliés à la voilure 14 et disposés de part et d'autre du fuselage 12. Comme illustré sur les figures 2 et 3, chaque ensemble de propulsion électrique 16 comprend une hélice 18 qui présente un axe de rotation A18.

Pour la suite de la description, une direction longitudinale X est parallèle à l'axe de rotation A18 de l'hélice 18. Un plan longitudinal contient l'axe de rotation A18. Un plan transversal est perpendiculaire à la direction longitudinale X. Les notions « avant » et « arrière » font référence au sens d'écoulement de l'air propulsé par l'ensemble de propulsion électrique, l'air s'écoulant de l'avant vers l'arrière.

Selon un mode de réalisation, un ensemble de propulsion électrique comprend plusieurs moteurs électriques 20 ainsi qu'un système de transmission 22, comme une boîte de vitesse par exemple, configuré pour accoupler les moteurs électriques 20 à l'hélice 18.

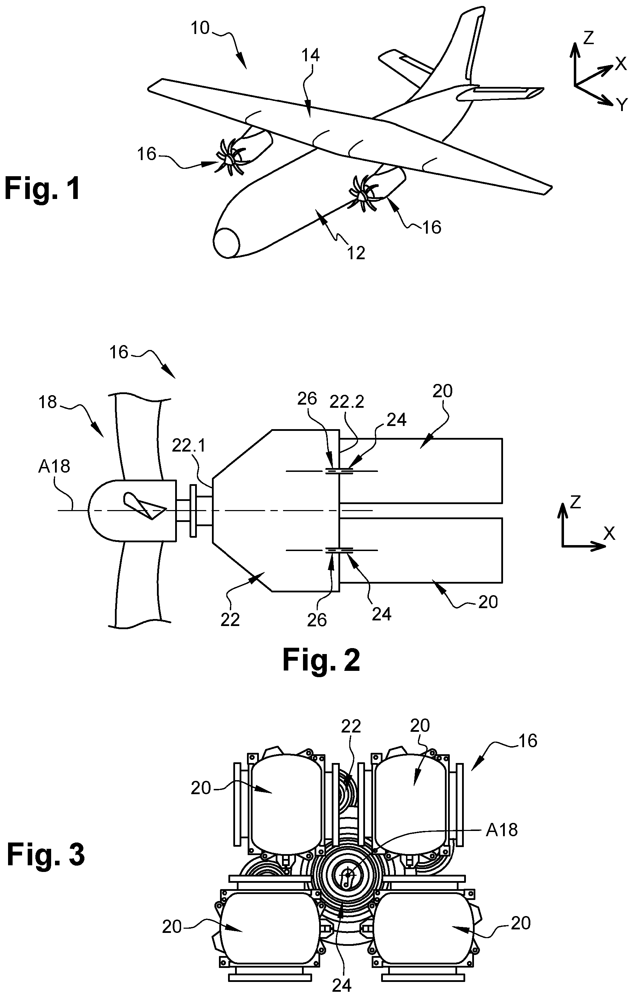

Selon un agencement visible sur les figures 2 et 3, le système de transmission 22 présente une première surface transversale 22.1 orientée vers l'hélice 18 ainsi qu'une deuxième surface transversale 22.2 opposée à la première surface transversale 22.1 et sur laquelle sont fixés les moteurs électriques 20.

Chaque moteur électrique 20 comprend un arbre moteur 24 parallèle à l'axe de rotation A18 de l'hélice 18. Chaque arbre moteur 24 est relié à un arbre d'entrée 26 du système de transmission 22. Ainsi, le système de transmission 22 comprend plusieurs arbres d'entrée 26 parallèles à l'axe de rotation A18 de l'hélice 18 et répartis autour de ce dernier.

Cet agencement n'est pas satisfaisant car le système de transmission 22 est relativement complexe en raison du nombre d'arbres d'entrée 26. Comme illustré sur la figure 3, l'ensemble de propulsion électrique 16 présente une section transversale relativement importante au niveau des moteurs électriques 20 en raison de leur agencement autour de l'axe de rotation A18 de l'hélice 18.

La présente invention vise à remédier à tout ou partie des inconvénients de l'art antérieur. A cet effet, l'invention a pour objet un ensemble de propulsion électrique comprenant :
- une hélice qui présente un axe de rotation,
- au moins deux moteurs électriques,
- un arbre moteur principal parallèle à l'axe de rotation de l'hélice,
- un système de transmission, configuré pour accoupler chaque moteur électrique à l'hélice, comportant un arbre de sortie relié à l'hélice et un arbre d'entrée relié à l'arbre moteur principal.

Selon l'invention, les moteurs électriques sont accouplés à l'arbre moteur principal et décalés les uns par rapport aux autres selon une direction longitudinale parallèle à l'axe de rotation de l'hélice. En complément, l'ensemble de propulsion électrique comprend, pour chaque moteur électrique, un arbre moteur secondaire tubulaire relié au moteur électrique, coaxial et concentrique à l'arbre moteur principal, ainsi qu'un système d'accouplement accouplant l'arbre moteur secondaire et l'arbre moteur principal, l'ensemble de propulsion électrique comportant un arbre moteur secondaire arrière et un système d'accouplement arrière les plus éloignés du système de transmission ainsi qu'un arbre moteur secondaire avant et un système d'accouplement arrière les plus proches du système de transmission. En complément, les arbres moteurs secondaires sont coaxiaux et concentriques, chaque arbre moteur secondaire présentant un diamètre intérieur sensiblement constant, les arbres moteurs secondaires présentant des diamètres intérieurs qui augmentent de l'arbre moteur secondaire avant jusqu'à l'arbre moteur secondaire arrière. En complément, chaque système d'accouplement comprend une surface extérieure reliée à l'arbre moteur secondaire correspondant par un accouplement permanent ainsi qu'une surface intérieure reliée à l'arbre moteur principal par un accouplement permanent, les systèmes d'accouplement ayant chacun une épaisseur sensiblement constante, les épaisseurs des systèmes d'accouplement augmentant du système d'accouplement avant vers le système d'accouplement arrière.

Le document US 7960883 B2 divulgue un ensemble de propulsion électrique de l'état de la technique.

Le fait que tous les moteurs électriques soient reliés à un même arbre moteur principal permet de ne prévoir qu'un seul arbre d'entrée au niveau du système de transmission, ce qui contribue à le rendre moins complexe et plus fiable. De plus, les moteurs électriques étant répartis selon une direction longitudinale parallèle à l'axe de rotation de l'hélice et non autour de cet axe, l'ensemble de propulsion électrique présente une section plus réduite au droit des moteurs électriques.

Selon une autre caractéristique, chaque système d'accouplement comprend au moins un mécanisme d'accouplement débrayable ou unidirectionnel configuré pour occuper un premier état dans lequel le mécanisme d'accouplement débrayable ou unidirectionnel accouple l'arbre moteur secondaire et l'arbre moteur principal lorsque le moteur électrique entraîne en rotation l'arbre moteur secondaire ainsi qu'un deuxième état dans lequel le mécanisme d'accouplement débrayable ou unidirectionnel désaccouple l'arbre moteur secondaire et l'arbre moteur principal lorsque le moteur électrique n'entraîne pas en rotation l'arbre moteur secondaire.

Selon une autre caractéristique, chaque mécanisme d'accouplement débrayable ou unidirectionnel est de type roue libre pour passer automatiquement et de manière autonome du premier état au deuxième état.

Selon une autre caractéristique, l'ensemble de propulsion électrique comprend un système de lubrification configuré pour lubrifier les mécanismes d'accouplement débrayables ou unidirectionnels.

Selon une autre caractéristique, au moins un système d'accouplement comprend un mécanisme d'accouplement débrayable ou unidirectionnel, une bague concentrique au mécanisme d'accouplement débrayable ou unidirectionnel ainsi qu'un accouplement permanant accouplant la bague et le mécanisme d'accouplement débrayable ou unidirectionnel.

Selon une autre caractéristique, les mécanismes d'accouplement débrayables ou unidirectionnels des différents systèmes d'accouplement ont sensiblement une même épaisseur et un même diamètre intérieur sensiblement égal au diamètre extérieur de l'arbre moteur principal.

Selon une autre caractéristique, l'ensemble de propulsion électrique comprend, pour chaque système d'accouplement, des butées avant et arrière positionnées de part et d'autre du système d'accouplement pour immobiliser en translation selon la direction longitudinale le système d'accouplement.

Selon une autre caractéristique, pour chaque système d'accouplement considéré, les butées avant et arrière sont solidaires de l'arbre moteur secondaire accouplé au système d'accouplement considéré ; la butée avant, la plus proche du système de transmission, correspondant à un épaulement de l'arbre moteur secondaire, la butée arrière, la plus éloignée du système de transmission, étant démontable.

Selon une autre caractéristique, les moteurs électriques présentent des rotors identiques. En complément, l'ensemble de propulsion électrique comprend, pour au moins un moteur électrique donné, au moins une liaison radiale reliant le rotor du moteur électrique donné et l'arbre moteur secondaire auquel le moteur électrique donné est relié.

Selon une autre caractéristique, l'ensemble de propulsion électrique comprend au moins un carter, dans lequel est positionné au moins un moteur électrique, comportant des parois transversales arrière et avant, chacune d'elles comprenant au moins un orifice pour loger au moins un arbre moteur secondaire. En complément, l'ensemble de propulsion électrique comprend, pour chaque paroi transversale arrière ou avant, un roulement logé dans l'orifice et intercalé entre la paroi transversale arrière ou avant et l'arbre moteur secondaire. L'invention a également pour objet un aéronef comprenant au moins un ensemble de propulsion électrique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue schématique latérale d'un ensemble de propulsion électrique illustrant un mode de réalisation de l'art antérieur,
- La figure 3 est une vue schématique arrière de l'ensemble de propulsion électrique visible sur la figure 2,

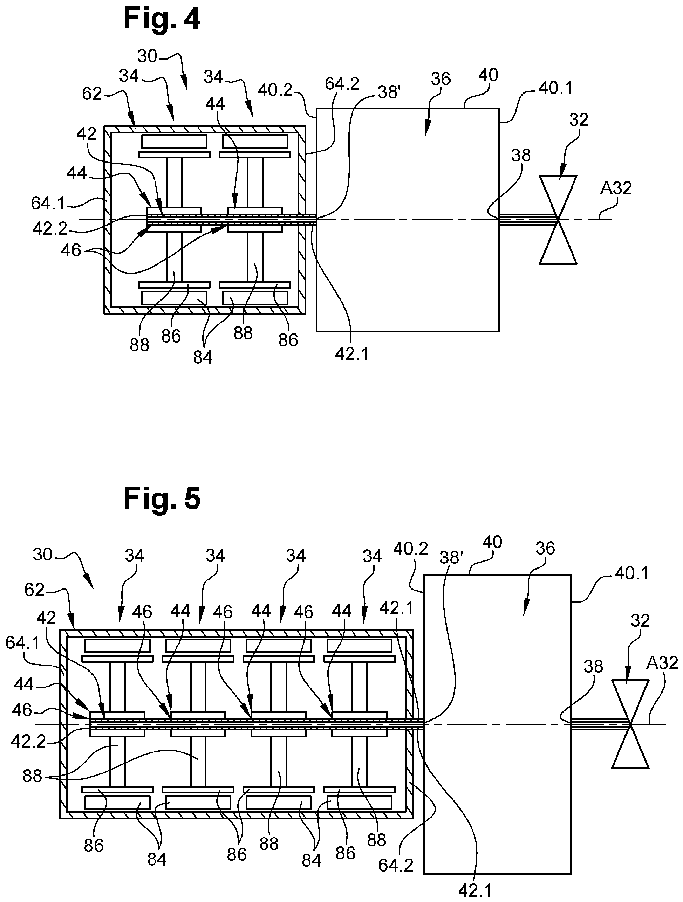

- La figure 4 est une vue schématique latérale d'un ensemble de propulsion électrique illustrant un premier mode de réalisation de l'invention,
- La figure 5 est une vue schématique latérale d'un ensemble de propulsion électrique illustrant un deuxième mode de réalisation de l'invention, et

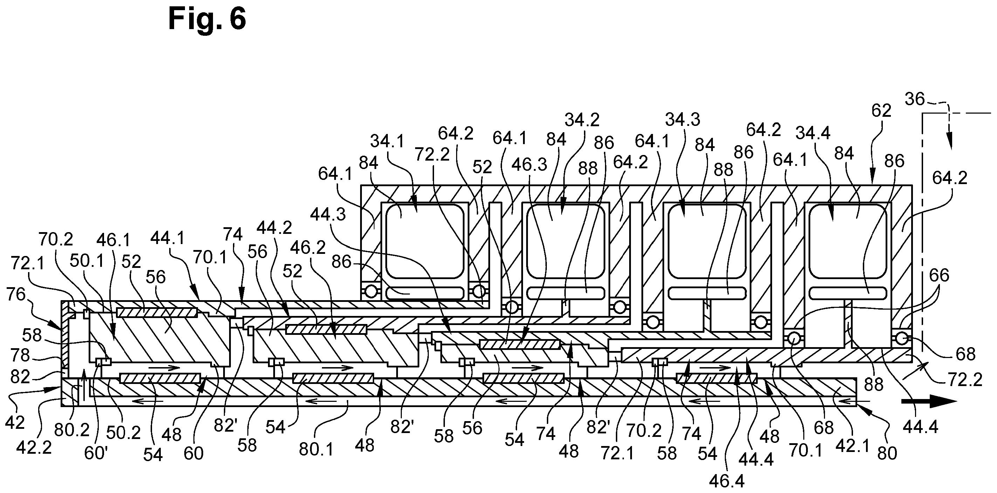

- La figure 6 est une demi-coupe longitudinale d'une partie d'un ensemble de propulsion électrique illustrant un mode de réalisation de l'invention.

Selon des modes de réalisation visibles sur les figures 4 et 5, un ensemble de propulsion électrique 30 comprend une hélice 32 qui présente un axe de rotation A32, au moins deux moteurs électriques 34 ainsi qu'un système de transmission 36, comme une boîte de vitesse par exemple, configuré pour accoupler les moteurs électriques 34 à l'hélice 32. L'axe de rotation A32 de l'hélice 32 est parallèle à la direction longitudinale.

Selon une application, un aéronef comprend au moins un tel ensemble de propulsion électrique 30.

Le fait de prévoir au moins deux moteurs électriques permet d'obtenir une architecture redondante renforçant la sécurité des vols.

Le système de transmission 36 est intercalé entre l'hélice 32 et les moteurs électriques 34. Il comprend un arbre de sortie 38 relié à l'hélice 32 et coaxial à l'axe de rotation A32 de l'hélice 32 ainsi qu'un arbre d'entrée 38'. Selon un agencement privilégié, l'arbre d'entrée 38' est coaxial à l'axe de rotation A32 de l'hélice 32. Selon une configuration, les arbres de sortie et d'entrée 38, 38' sont tubulaires et configurés pour permettre le passage d'une commande d'un système de réglage du pas de l'hélice. En complément, le système de transmission 36 est configuré pour permettre à ladite commande de le traverser.

Selon un mode de réalisation, le système de transmission 36 comprend une boîte de transmission 40 qui présente une première paroi transversale 40.1 orientée vers l'hélice 32 ainsi qu'une deuxième paroi transversale 40.2 opposée à la première paroi transversale 40.1 et orientée vers les moteurs électriques 34. Chacune des première et deuxième parois transversales 40.1, 40.2 comprend au moins un orifice pour permettre aux arbres de sortie et d'entrée 38, 38' de les traverser.

Selon un mode de réalisation visible sur la figure 4, l'ensemble de propulsion électrique comprend deux moteurs électriques 34. Selon d'autres modes de réalisation visibles sur les figures 5 et 6, l'ensemble de propulsion électrique 30 comprend quatre moteurs électriques 34. Bien entendu, l'invention n'est pas limitée à ces nombres pour les moteurs électriques 34. Quel que soit le mode de réalisation, l'ensemble de propulsion électrique 30 comprend au moins deux moteurs électriques 34, ces derniers étant décalés les uns par rapport aux autres selon une direction longitudinale parallèle à l'axe de rotation A32 de l'hélice 32.

L'ensemble de propulsion électrique 30 comprend un arbre moteur principal 42, parallèle à l'axe de rotation A32 de l'hélice 32, qui présente une première extrémité 42.1 reliée à l'arbre d'entrée 38' du système de transmission 36 ainsi qu'une deuxième extrémité 42.2 opposée à la première extrémité 42.1. L'arbre moteur principal 42 et l'arbre d'entrée 38' sont alignés. L'arbre moteur principal 42 est coaxial à l'axe de rotation A32 de l'hélice 32. Selon un mode de réalisation, cet arbre moteur principal 42 est tubulaire pour loger la commande d'un système de réglage du pas d'hélice.

L'ensemble de propulsion comprend, pour chaque moteur électrique 34, un arbre moteur secondaire 44 relié au moteur électrique 34, coaxial et concentrique à l'arbre moteur principal 42, et tubulaire pour pouvoir loger ledit arbre moteur principal 42. Chaque arbre moteur secondaire 44 présente un diamètre intérieur et un diamètre extérieur. En complément, l'ensemble de propulsion électrique 30 comprend, pour chaque moteur électrique 34, un système d'accouplement 46 accouplant l'arbre moteur secondaire 44 du moteur électrique 34 et l'arbre moteur principal 42.

Selon une configuration, chaque système d'accouplement 46 comprend au moins un mécanisme d'accouplement débrayable ou unidirectionnel 48, comme une roue libre par exemple. Chaque mécanisme d'accouplement débrayable ou unidirectionnel 48 est configuré pour occuper un premier état dans lequel le mécanisme d'accouplement débrayable ou unidirectionnel 48 accouple l'arbre moteur secondaire 44 et l'arbre moteur principal 42 lorsque le moteur électrique 34 entraîne en rotation l'arbre moteur secondaire 44, notamment lorsque le moteur électrique 34 fonctionne correctement, ainsi qu'un deuxième état dans lequel le mécanisme d'accouplement débrayable ou unidirectionnel 48 désaccouple l'arbre moteur secondaire 44 et l'arbre moteur principal 42 lorsque le moteur électrique 34 n'entraîne pas en rotation l'arbre moteur secondaire 44, notamment en cas de dysfonctionnement du moteur électrique 34. Les mécanismes d'accouplement débrayables ou unidirectionnels 48 permettent, en cas de dysfonctionnement d'un moteur électrique, de réduire les risques d'endommagement des autres moteurs électriques. Selon un mode de réalisation, chaque mécanisme d'accouplement débrayable ou unidirectionnel 48 est de type roue libre pour passer automatiquement et de manière autonome du premier état au deuxième état.

Selon un mode de réalisation visible sur la figure 6, l'ensemble de propulsion électrique 30 comprend plusieurs moteurs électriques 34.1 à 34.4 décalés les uns par rapport aux autres selon la direction longitudinale, dont un moteur électrique arrière 34.1 le plus éloigné du système de transmission 36, et un moteur électrique avant 34.4 le plus proche du système de transmission 36. L'ensemble de propulsion électrique 30 comprend plusieurs arbres moteurs secondaires 44.1 à 44.4, un pour chaque moteur électrique 34.1 à 34.4, dont un arbre moteur secondaire arrière 44.1 le plus éloigné du système de transmission 36 et un arbre moteur secondaire avant 44.4 le plus proche du système de transmission 36. Les différents arbres moteurs secondaires 44.1 à 44.4 sont coaxiaux et concentriques.

L'arbre moteur principal 42 comprend, entre ses première et deuxième extrémités 42.1, 42.2, un tronçon pour chaque système d'accouplement 46.

Selon un mode de réalisation visible sur la figure 6, l'arbre moteur principal 42 présente un diamètre constant sur toute sa longueur. Ainsi, les différents tronçons de l'arbre moteur principal 42 ont tous le même diamètre. En variante, chaque tronçon a un diamètre constant, les tronçons présentant des diamètres qui diminuent de la première extrémité 42.1 vers la deuxième extrémité 42.2.

Selon un mode de réalisation visible sur la figure 6, chaque arbre moteur secondaire 44.1 à 44.4 présente un diamètre intérieur sensiblement constant et un diamètre extérieur sensiblement constant, les arbres moteurs secondaires 44.1 à 44.4 présentant des diamètres intérieurs et extérieurs qui augmentent de l'arbre moteur secondaire avant 44.4 jusqu'à l'arbre moteur secondaire arrière 44.1. Cette configuration permet un démontage de l'arbre moteur principal 42 en le tirant vers l'arrière et en l'écartant du système de transmission 36. Selon une autre variante, les arbres moteurs secondaires 44.1 à 44.4 présentent des diamètres intérieurs et extérieurs qui diminuent de l'arbre moteur secondaire avant 44.4 jusqu'à l'arbre moteur secondaire arrière 44.1. Bien entendu, l'invention n'est pas limitée à ces variantes. Ainsi, les arbres moteurs secondaires 44.1 à 44.4 pourraient ne pas être concentriques et avoir le même diamètre intérieur et le même diamètre extérieur.

L'ensemble de propulsion électrique 30 comprend un système d'accouplement 46.1 à 46.4 pour chaque moteur électrique 34.1 à 34.4 dont un système d'accouplement arrière 46.1, le plus écarté du système de transmission 36, qui relie l'arbre moteur secondaire arrière 44.1 et l'arbre moteur principal 42 ainsi qu'un système d'accouplement avant 46.4, le plus proche du système de transmission 36, qui relie l'arbre moteur secondaire avant 44.4 et l'arbre moteur principal 42. Chaque système d'accouplement 46.1 à 46.4 comprend une surface extérieure 50.1 reliée à l'arbre moteur secondaire 44.1 à 44.4 correspondant par un accouplement permanent 52, comme un clavetage par exemple, ainsi qu'une surface intérieure 50.2 reliée à l'arbre moteur principal 42 par un accouplement permanent 54, comme un clavetage par exemple.

Selon un mode de réalisation visible sur la figure 6, les différents systèmes d'accouplement 46.1 à 46.4 ont chacun une épaisseur (distance séparant les surfaces extérieure et intérieure 50.1, 50.2) sensiblement constante, les épaisseurs des systèmes d'accouplement augmentant du système d'accouplement avant 46.4 vers le système d'accouplement arrière 46.1. En variante, les épaisseurs des différents systèmes d'accouplement 46.1 à 46.4 pourraient diminuer du système d'accouplement avant 46.4 vers le système d'accouplement arrière 46.1. Selon une autre variante, les systèmes d'accouplement 46.1 à 46.4 pourraient avoir la même épaisseur.

Selon une configuration, au moins un système d'accouplement 46.1 à 46.4 comprend un mécanisme d'accouplement débrayable ou unidirectionnel 48 comme une roue libre par exemple, une bague 56 concentrique au mécanisme d'accouplement débrayable ou unidirectionnel 48 ainsi qu'un accouplement permanent 58, comme un clavetage par exemple, accouplant la bague 56 et le mécanisme d'accouplement débrayable ou unidirectionnel 48. Le mécanisme d'accouplement débrayable ou unidirectionnel 48 et la bague 56 sont coaxiaux et concentriques, l'un d'eux étant positionné à l'intérieur de l'autre. Selon un mode de réalisation, chaque système d'accouplement 46.1 à 46.4 comprend au moins une butée 60 pour immobiliser, en translation selon la direction longitudinale, la bague 56 et le mécanisme d'accouplement débrayable ou unidirectionnel 48 l'un par rapport à l'autre. A titre d'exemple, chaque système d'accouplement 46.1 à 46.4 comprend une première butée 60 sous la forme d'un épaulement de la bague 56 et une deuxième butée 60' sous la forme d'un anneau élastique logé dans une gorge ménagée dans la bague 56, le mécanisme d'accouplement débrayable ou unidirectionnel 48 étant positionné entre les première et deuxième butées 60, 60'.

Selon un agencement, la bague 56 est positionnée autour du mécanisme d'accouplement débrayable ou unidirectionnel 48. Selon cet agencement, le mécanisme d'accouplement débrayable ou unidirectionnel 48 comprend une surface intérieure qui correspond à la surface intérieure 50.2 du système d'accouplement 46.1 à 46.4 et présente un diamètre intérieur sensiblement égal au diamètre du tronçon considéré de l'arbre moteur principal 42. En complément, la bague 56 comprend une surface extérieure qui correspond à la surface extérieure 50.1 du système d'accouplement 46.1 à 46.4 et présente un diamètre extérieur sensiblement égal au diamètre intérieur de l'arbre moteur secondaire 44.1 à 44.4 correspondant. Le mécanisme d'accouplement débrayable ou unidirectionnel 48 comporte une surface extérieure qui présente un diamètre sensiblement égal à celui de la surface intérieure de la bague 56.

Selon un mode de réalisation, chaque système d'accouplement 46.1 à 46.4 comprend un mécanisme d'accouplement débrayable ou unidirectionnel 48. Les mécanismes d'accouplement débrayables ou unidirectionnels 48 des différents systèmes d'accouplement 46.1 à 46.4 ont sensiblement la même épaisseur et le même diamètre intérieur sensiblement égal au diamètre extérieur de l'arbre moteur principal 42. L'ensemble de propulsion électrique 30 comprend, pour chaque mécanisme d'accouplement débrayable ou unidirectionnel 48, un accouplement permanent 54, comme un clavetage par exemple, accouplant le mécanisme d'accouplement débrayable ou unidirectionnel 48 considéré et l'arbre moteur principal 42. A l'exception du système d'accouplement avant 46.4 ayant la plus petite épaisseur et ne comprenant pas de bague 56, les autres systèmes d'accouplement 46.1 à 46.3 comprennent chacun une bague 56 qui présente une épaisseur sensiblement constante, les épaisseurs des bagues 56 augmentant en s'écartant du système de transmission 36. Chaque bague 56 présente un diamètre intérieur sensiblement constant ainsi qu'un diamètre extérieur sensiblement constant. Les bagues 56 comportent des diamètres intérieurs égaux ainsi que des diamètres extérieurs qui augmentent en s'écartant du système de transmission 36.

L'ensemble de propulsion électrique 30 comprend au moins un carter moteur 62 dans lequel est positionné au moins un moteur électrique 34. Selon des modes de réalisation visibles sur les figures 4 et 5, l'ensemble de propulsion électrique 30 comprend un seul carter moteur 62 dans lequel sont positionnés tous les moteurs électriques 34.1 à 34.4.

Selon un autre mode de réalisation visible sur la figure 6, l'ensemble de propulsion électrique 30 comprend, pour chaque moteur électrique 34.1 à 34.4, un carter moteur 62 qui présente une paroi transversale arrière 64.1 ainsi qu'une paroi transversale avant 64.2 plus proche du système de transmission 36 que la paroi transversale arrière 64.1. Chaque paroi transversale arrière ou avant 64.1, 64.2 d'un moteur électrique 34.1 à 34.4 donné comprend au moins un orifice 66 pour loger au moins l'arbre moteur secondaire 44.1 à 44.4 relié au moteur électrique 34.1 à 34.4 donné. L'ensemble de propulsion électrique 30 comprend, pour chaque paroi transversale arrière ou avant 64.1, 64.2 d'un moteur électrique 34.1 à 34.4 donné, un roulement 68 logé dans l'orifice 66 et intercalé entre la paroi transversale arrière ou avant 64.1, 64.2 et l'arbre moteur secondaire 44.1 à 44.4 relié au moteur électrique 34.1 à 34.4 donné. Ce roulement 68 favorise la rotation de l'arbre moteur secondaire 44.1 à 44.4 par rapport à la paroi transversale arrière ou avant 64.1, 64.2.

Selon un mode de réalisation visible sur la figure 6, l'ensemble de propulsion électrique 30 comprend, pour chaque système d'accouplement 46.1 à 46.4, des butées avant et arrière 70.1, 70.2, positionnées de part et d'autre du système d'accouplement 46.1 à 46.4, permettant d'immobiliser en translation selon la direction longitudinale le système d'accouplement 46.1 à 46.4. Selon un agencement, les butées avant et arrière 70.1, 70.2 de chaque système d'accouplement 46.1 à 46.2 considéré sont solidaires de l'arbre moteur secondaire 44.1 à 44.4 accouplé au système d'accouplement 46.1 à 46.2 considéré. Selon une configuration, la butée avant 70.1, la plus proche du système de transmission 36, correspond à un épaulement de l'arbre moteur secondaire 44.1 à 44.4. La butée arrière 70.2, la plus éloignée du système de transmission 36, est démontable et comprend un anneau élastique inséré dans une gorge ménagée dans l'arbre moteur secondaire 44.1 à 44.4.

Comme illustré sur la figure 6, chaque arbre moteur secondaire 44.1 à 44.4 comprend une extrémité arrière 72.1, la plus éloignée du système de transmission 36, ainsi qu'une extrémité avant 72.2, la plus proche du système de transmission 36. Selon une configuration, pour chaque arbre moteur secondaire 44.1 à 44.4, son extrémité avant 72.2 ne s'étend pas au-delà de la paroi transversale avant 64.2 positionnée à l'avant du moteur électrique 34.1 à 34.4 auquel est accouplé l'arbre moteur secondaire 44.1 à 44.4. Pour chaque arbre moteur secondaire 44.1 à 44.4, son extrémité arrière 72.1 est décalée vers l'arrière par rapport à la paroi transversale arrière 64.1 positionnée à l'arrière du moteur électrique 34.1 à 34.4 auquel est accouplé l'arbre moteur secondaire 44.1 à 44.4. Ainsi, chaque arbre moteur secondaire 44.1 à 44.4 comprend une extension 74 en saillie vers l'arrière par rapport à la paroi transversale arrière 64.1 positionnée à l'arrière du moteur électrique 34.1 à 34.4 auquel est relié l'arbre moteur secondaire 44.1 à 44.4.

Selon une configuration, l'ensemble de propulsion électrique 30 comprend un bouchon 76 pour obturer l'extrémité arrière 72.1 de l'arbre moteur secondaire arrière 44.1. Ce bouchon 76 est relié de manière démontable à l'arbre moteur secondaire arrière 44.1. Selon un agencement, ce bouchon 76 comprend un orifice 78 permettant à l'arbre moteur secondaire arrière 44.1 de le traverser.

Selon un mode de réalisation visible sur la figure 6, l'ensemble de propulsion électrique 30 comprend un système de lubrification 80 configuré pour lubrifier les différents mécanismes d'accouplement débrayables ou unidirectionnels 48 et/ou les roulements 68. En complément, l'ensemble de propulsion électrique 30 comprend des joints d'étanchéité 82 positionnés pour délimiter une zone dans laquelle sont positionnés les mécanismes d'accouplement débrayables ou unidirectionnels 48. Le système de lubrification 80 prévu pour les différents mécanismes d'accouplement débrayables ou unidirectionnels 48 comprend un conduit 80.1, prévu dans l'arbre moteur principal 42, débouchant à l'extérieur de l'arbre moteur principal 42 via au moins un orifice 80.2. L'ensemble de propulsion électrique 30 comprend un joint d'étanchéité d'extrémité 82 intercalé entre le bouchon 76 et l'arbre moteur principal 42 ainsi que des joints d'étanchéité intercalaires 82' positionnés entre les bagues 56 des systèmes d'accouplement 46.1 à 46.3 et les extrémités arrières 72.1 des arbres moteurs secondaires 44.2 à 44.4. Ces joints d'étanchéité 82, 82' sont des joints d'étanchéité tournant. Dans un mode de fonctionnement nominal, les arbres moteurs secondaires 44.1 à 44.4 tournant à la même vitesse, les joints d'étanchéité 82' ne sont pas tournants. En cas de panne, au moins un des arbres moteurs secondaires 44.1 à 44.4 ne tournant pas à la même vitesse que les autres, au moins un de ces joints d'étanchéité 82' est tournant.

D'autres solutions sont envisageables pour la lubrification des mécanismes d'accouplement débrayables ou unidirectionnels 48.

Le mode de réalisation visible sur la figure 6 procure une maintenabilité accrue, les systèmes d'accouplement 46.1 à 46.4 pouvant être démontés sans avoir besoin de démonter les moteurs électriques 34.1 à 34.4. Selon un mode opératoire, pour démonter les systèmes d'accouplement 46.1 à 46.4, le bouchon 76 et le joint d'étanchéité d'extrémité 82 sont retirés, puis la butée arrière 70.2 en forme d'anneau élastique du système d'accouplement arrière 46.1 est retirée. Dès lors, le mécanisme d'accouplement débrayable ou unidirectionnel 48 et la bague 56 du système d'accouplement arrière 46.1 sont extraits de l'arbre moteur secondaire arrière 44.1. Pour chacun des systèmes d'accouplement 46.2 à 46.4 suivants accouplé à un arbre moteur secondaire 44.1 à 44.4 donné, le joint d'étanchéité intercalaire 82' prévu à l'extrémité arrière 72.1 de l'arbre moteur secondaire 44.1 à 44.4 donné est démonté, la butée arrière 70.2 en forme d'anneau élastique est retirée, puis le mécanisme d'accouplement débrayable ou unidirectionnel 48 et l'éventuelle bague 56 sont extraits de l'arbre moteur secondaire 44.1 à 44.4 donné.

Selon un mode de réalisation, chaque moteur électrique 34, 34.1 à 34.4 comprend un stator 84 fixe, relié au carter moteur 62 et coaxial à l'axe de rotation A32 de l'hélice 32, ainsi qu'un rotor 86 positionné à l'intérieur du stator 84 et coaxial à l'axe de rotation A32 de l'hélice 32, le rotor 86 étant creux pour être traversé par l'arbre moteur secondaire 44.1 à 44.4 correspondant et relié à ce dernier. Selon une configuration, le stator 84 est bobiné et le rotor 86 est à aimants permanents. Bien entendu, l'invention n'est pas limitée à cette configuration pour les moteurs électriques.

Lorsqu'un moteur électrique 34.1 à 34.4 dysfonctionne, le mécanisme d'accouplement unidirectionnel 48 du système d'accouplement 46.1 à 46.4 accouplé à ce moteur électrique 34.1 à 34.4 défectueux permet de désaccoupler automatiquement et de manière autonome son arbre moteur secondaire 44.1 à 44.4 de l'arbre moteur principal 42, ce qui permet de réduire l'usure des roulements 68 et les risques d'endommagement des autres moteurs électriques 34.1 à 34.4.

Selon un mode de réalisation, les différents moteurs électriques présentent des rotors 86 identiques ayant le même diamètre extérieur et le même diamètre intérieur. Les moteurs électriques sont identiques et présentent le même entrefer.

L'ensemble de propulsion électrique 30 comprend, pour au moins un moteur électrique 34.1 à 34.4 donné, au moins une liaison radiale 88 reliant le rotor 86 du moteur électrique 34.1 à 34.4 donné et l'arbre moteur secondaire 44.1 à 44.4 auquel le moteur électrique 34.1 à 34.4 est relié. Cette solution permet de conserver un diamètre d'entrefer le plus important possible, d'avoir des arbres moteurs secondaires 44.1 à 44.4 concentriques et de limiter la masse des éléments tournants.

Selon un mode de réalisation visible sur la figure 6, les rotors 86 des différents moteurs électriques 34.1 à 34.4 sont tous identiques, le rotor 86 du moteur électrique arrière 34.1 présentant un diamètre intérieur sensiblement égal au diamètre extérieur de l'arbre moteur secondaire arrière 44.1. Les rotors 86 des autres moteurs électriques 34.2 à 34.4 sont reliés par des liaisons radiales aux arbres moteurs secondaires 44.2 à 44.4.

Selon une configuration, pour chaque ensemble de propulsion électrique 30, chaque moteur électrique 34.1 à 34.4 est configuré en matière de puissance de manière à permettre un vol sûr même en cas de perte d'un moteur électrique ou des autres moteurs électriques. Chaque moteur électrique 34.1 à 34.4 est configuré pour entraîner l'arbre moteur secondaire 44.1 à 44.4 à une vitesse de rotation élevée, supérieure ou égale à 10000 tr/min.

L'ensemble de propulsion électrique 30 présente les principaux avantages suivants :
- Il présente un système de transmission 36 moins complexe et plus fiable que ceux de l'art antérieur du fait qu'il ne comprend qu'un seul arbre d'entrée 38'.
- Il présente une section réduite au niveau des moteurs électriques du fait que ces derniers soient alignés selon une direction parallèle à l'axe de rotation A32 de l'hélice 32 et non répartis autour de cet axe de rotation A32.
- Il présente une grande compacité du fait que les arbres moteurs secondaires 44.1 à 44.4 soient agencés de manière concentrique.
- Il présente une densité de puissance élevée du fait de l'utilisation de moteurs électriques 34.1 à 34.4 tournant à des vitesses élevées et/ou présentant des diamètres d'entrefer importants.
- Il présente une sûreté élevée en raison de la présence des mécanismes d'accouplement débrayables ou unidirectionnels 48 qui permettent chacun de désaccoupler un moteur électrique 34.1 à 34.4 défectueux de l'arbre moteur principal 42.
- Il présente une maintenabilité accrue compte tenu de son architecture.

## Revendications

1. Ensemble de propulsion électrique comprenant :
- une hélice (32) qui présente un axe de rotation (A32),
- au moins deux moteurs électriques (34, 34.1 à 34.4),
- un arbre moteur principal (42) parallèle à l'axe de rotation (A32) de l'hélice (32),
- un système de transmission (36), configuré pour accoupler chaque moteur électrique (34, 34.1 à 34.4) à l'hélice (32), comportant un arbre de sortie (38) relié à l'hélice (32) et un arbre d'entrée (38') relié à l'arbre moteur principal (42) ;
les moteurs électriques (34, 34.1 à 34.4) étant accouplés à l'arbre moteur principal (42) et décalés les uns par rapport aux autres selon une direction longitudinale parallèle à l'axe de rotation (A32) de l'hélice (32), l'ensemble de propulsion électrique comprenant, pour chaque moteur électrique (34, 34.1 à 34.4), un arbre moteur secondaire (44, 44.1 à 44.4) tubulaire relié au moteur électrique (34, 341 à 34.4), coaxial et concentrique à l'arbre moteur principal (42), ainsi qu'un système d'accouplement (46, 46.1 à 46.4) accouplant l'arbre moteur secondaire (44, 44.1 à 44.4) et l'arbre moteur principal (42), l'ensemble de propulsion électrique (30) comportant un arbre moteur secondaire arrière (44.1) et un système d'accouplement arrière (46.1) les plus éloignés du système de transmission (36) ainsi qu'un arbre moteur secondaire avant (44.4) et un système d'accouplement avant (46.4) les plus proches du système de transmission (36), en ce que les arbres moteurs secondaires (44.1 à 44.4) sont coaxiaux et concentriques ; l'ensemble de propulsion électrique **caracterisé en ce que** chaque arbre moteur secondaire (44.1 à 44.4) présente un diamètre intérieur sensiblement constant, les arbres moteurs secondaires (44.1 à 44.4) présentant des diamètres intérieurs qui augmentent de l'arbre moteur secondaire avant (44.4) jusqu'à l'arbre moteur secondaire arrière (44.1), et **en ce que** chaque système d'accouplement (46.1 à 46.4) comprend une surface extérieure (50.1) reliée à l'arbre moteur secondaire (44.1 à 44.4) correspondant par un accouplement permanent (52) ainsi qu'une surface intérieure (50.2) reliée à l'arbre moteur principal (42) par un accouplement permanent (54), les systèmes d'accouplement (46.1 à 46.4) ayant chacun une épaisseur sensiblement constante, les épaisseurs des systèmes d'accouplement (46.1 à 46.4) augmentant du système d'accouplement avant (46.4) vers le système d'accouplement arrière (46.1).

2. Ensemble de propulsion électrique selon la revendication précédente, **caractérisé en ce que** chaque système d'accouplement (46, 46.1 à 46.4) comprend au moins un mécanisme d'accouplement débrayable ou unidirectionnel (48) configuré pour occuper un premier état dans lequel le mécanisme d'accouplement débrayable ou unidirectionnel (48) accouple l'arbre moteur secondaire (44, 44.1 à 44.4) et l'arbre moteur principal (42) lorsque le moteur électrique (34, 34.1 à 34.4) entraîne en rotation l'arbre moteur secondaire (44, 44.1 à 44.4) ainsi qu'un deuxième état dans lequel le mécanisme d'accouplement débrayable ou unidirectionnel (48) désaccouple l'arbre moteur secondaire (44, 44.1 à 44.4) et l'arbre moteur principal (42) lorsque le moteur électrique (34, 34.1 à 34.4) n'entraîne pas en rotation l'arbre moteur secondaire (44, 44.1 à 44.4).

3. Ensemble de propulsion électrique selon la revendication précédente, **caractérisé en ce que** chaque mécanisme d'accouplement débrayable ou unidirectionnel (48) est de type roue libre pour passer automatiquement et de manière autonome du premier état au deuxième état.

4. Ensemble de propulsion électrique selon l'une des revendications 2 à 3, **caractérisé en ce que** l'ensemble de propulsion électrique comprend un système de lubrification (80) configuré pour lubrifier les mécanismes d'accouplement débrayables ou unidirectionnels (48).

5. Ensemble de propulsion électrique selon l'une des revendications précédentes, **caractérisé en ce qu'**au moins un système d'accouplement (46.1 à 46.4) comprend un mécanisme d'accouplement débrayable ou unidirectionnel (48), une bague (56) concentrique au mécanisme d'accouplement débrayable ou unidirectionnel (48) ainsi qu'un accouplement permanent (58) accouplant la bague (56) et le mécanisme d'accouplement débrayable ou unidirectionnel (48).

6. Ensemble de propulsion électrique selon la revendication précédente, **caractérisé en ce que** les mécanismes d'accouplement débrayables ou unidirectionnels (48) des différents systèmes d'accouplement (46.1 à 46.4) ont sensiblement une même épaisseur et un même diamètre intérieur sensiblement égal au diamètre extérieur de l'arbre moteur principal (42).

7. Ensemble de propulsion électrique l'une des revendications précédentes, **caractérisé en ce que** l'ensemble de propulsion électrique (30) comprend, pour chaque système d'accouplement (46.1 à 46.4), des butées avant et arrière (70.1, 70.2) positionnées de part et d'autre du système d'accouplement (46.1 à 46.4) pour immobiliser en translation selon la direction longitudinale le système d'accouplement (46.1 à 46.4).

8. Ensemble de propulsion électrique selon la revendication précédente, **caractérisé en ce que**, pour chaque système d'accouplement (46.1 à 46.4) considéré, les butées avant et arrière (70.1, 70.2) sont solidaires de l'arbre moteur secondaire (44.1 à 44.4) accouplé au système d'accouplement (46.1 à 46.2) considéré, la butée avant (70.1), la plus proche du système de transmission (36), correspondant à un épaulement de l'arbre moteur secondaire (44.1 à 44.4), la butée arrière (70.2), la plus éloignée du système de transmission (36), étant démontable.

9. Ensemble de propulsion électrique selon l'une des revendications précédentes, **caractérisé en ce que** les différents moteurs électriques (34.1 à 34.4) présentent des rotors (86) identiques et **en ce que** l'ensemble de propulsion électrique comprend, pour au moins un moteur électrique (34.1 à 34.4) donné, au moins une liaison radiale (88) reliant le rotor (86) du moteur électrique (34.1 à 34.4) donné et l'arbre moteur secondaire (44.1 à 44.4) auquel le moteur électrique (34.1 à 34.4) donné est relié.

10. Ensemble de propulsion électrique selon l'une des revendications précédentes, **caractérisé en ce que** l'ensemble de propulsion électrique (30) comprend au moins un carter (62), dans lequel est positionné au moins un moteur électrique (34, 34.1 à 34.4), comportant des parois transversales arrière et avant (64.1, 64.2), chacune d'elles comprenant au moins un orifice (66) pour loger au moins un arbre moteur secondaire (44.1 à 44.4) et **en ce que** l'ensemble de propulsion électrique comprend, pour chaque paroi transversale arrière ou avant (64.1, 64.2), un roulement (68) logé dans l'orifice (66) et intercalé entre la paroi transversale arrière ou avant (64.1, 64.2) et l'arbre moteur secondaire (44.1 à 44.4).

11. Aéronef comprenant au moins un ensemble de propulsion électrique selon l'une des revendications précédentes.

## Patentansprüche

1. Elektrische Antriebseinheit mit:
- einem Propeller (32), der eine Drehachse (A32) aufweist,
- wenigstens zwei Elektromotoren (34, 34.1 bis 34.4),
- einer Hauptantriebswelle (42), die parallel zur Drehachse (A32) des Propellers (32) verläuft,
- einem Getriebesystem (36), das so eingerichtet ist, dass es jeden Elektromotor (34, 34.1 bis 34.4) mit dem Propeller (32) koppelt, mit einer Abtriebswelle (38), die mit dem Propeller (32) verbunden ist, und einer Antriebswelle (38'), die mit der Hauptantriebswelle (42) verbunden ist;
wobei die Elektromotoren (34, 34.1 bis 34.4) mit der Hauptantriebswelle (42) gekoppelt und in einer Längsrichtung parallel zur Drehachse (A32) des Propellers (32) gegeneinander versetzt sind, wobei die elektrische Antriebseinheit für jeden Elektromotor (34, 34.1 bis 34.4) eine rohrförmige, mit dem Elektromotor (34, 341 bis 34.4) verbundene sekundäre Antriebswelle (44, 44.1 bis 44.4) aufweist, die koaxial und konzentrisch mit der Hauptantriebswelle (42) ist, sowie ein Kupplungssystem (46, 46.1 bis 46.4), das die sekundäre Motorwelle (44, 44.1 bis 44.4) und die Hauptantriebswelle (42) koppelt, wobei die elektrische Antriebseinheit (30) eine hintere sekundäre Motorwelle (44.1) und ein hinteres Kupplungssystem (46.1) aufweist, die am weitesten vom Getriebesystem (36) entfernt sind, sowie eine vordere sekundäre Motorwelle (44.4) und ein vorderes Kupplungssystem (46.4), die am nächsten zum Getriebesystem (36) liegen, und dass die sekundären Motorwellen (44.1 bis 44.4) koaxial und konzentrisch sind, wobei die elektrische Antriebseinheit **dadurch gekennzeichnet ist, dass** jede sekundäre Antriebswelle (44.1 bis 44.4) einen im Wesentlichen konstanten Innendurchmesser aufweist, wobei die sekundären Antriebswellen (44.1 bis 44.4) Innendurchmesser aufweisen, die von der vorderen sekundären Antriebswelle (44.4) zur hinteren sekundären Antriebswelle (44.1) zunehmen, und dass jedes Kupplungssystem (46.1 bis 46.4) eine äußere Oberfläche (50.1) aufweist, die mit der entsprechenden sekundären Antriebswelle (44.1 bis 44.4) über eine Dauerkupplung (52) verbunden ist, sowie eine Innenfläche (50.2), die mit der Hauptantriebswelle (42) über eine Dauerkupplung (54) verbunden ist, wobei die Kupplungssysteme (46.1 bis 46.4) jeweils eine im Wesentlichen konstante Dicke aufweisen, wobei die Dicken der Kupplungssysteme (46.1 bis 46.4) vom vorderen Kupplungssystem (46.4) zum hinteren Kupplungssystem (46.1) hin zunehmen.

2. Elektrische Antriebseinheit nach dem vorhergehenden Anspruch, **dadurch gekennzeichnet, dass** jedes Kupplungssystem (46, 46.1 bis 46.4) wenigstens einen auskuppelbaren oder unidirektionalen Kupplungsmechanismus (48) umfasst, der so eingerichtet ist, dass er einen ersten Zustand einnimmt, in dem der auskuppelbare oder unidirektionale Kupplungsmechanismus (48) die sekundäre Antriebswelle (44, 44.1 bis 44.4) und die Hauptantriebswelle (42) koppelt, wenn der Elektromotor (34, 34.1 bis 34.4) die sekundäre Motorwelle (44, 44.1 bis 44.4) in Drehung versetzt, sowie einen zweiten Zustand, in dem der auskuppelbare oder unidirektionale Kupplungsmechanismus (48) die sekundäre Motorwelle (44, 44.1 bis 44.4) und die Hauptantriebswelle (42) auskuppelt, wenn der Elektromotor (34, 34.1 bis 34.4) die sekundäre Motorwelle (44, 44.1 bis 44.4) nicht in Drehung versetzt.

3. Elektrische Antriebseinheit nach dem vorhergehenden Anspruch, **dadurch gekennzeichnet, dass** jeder auskuppelbare oder unidirektionale Kupplungsmechanismus (48) vom Freilauf-Typ ist, um automatisch und selbstständig vom ersten Zustand in den zweiten Zustand zu wechseln.

4. Elektrische Antriebseinheit nach einem der Ansprüche 2 bis 3, **dadurch gekennzeichnet, dass** die elektrische Antriebseinheit ein Schmiersystem (80) umfasst, das so eingerichtet ist, dass es die auskuppelbaren oder unidirektionalen Kupplungsmechanismen (48) schmiert.

5. Elektrische Antriebseinheit nach einem der vorhergehenden Ansprüche, **dadurch gekennzeichnet, dass** wenigstens ein Kupplungssystem (46.1 bis 46.4) einen auskuppelbaren oder unidirektionalen Kupplungsmechanismus (48), einen zu dem auskuppelbaren oder unidirektionalen Kupplungsmechanismus (48) konzentrischen Ring (56) sowie eine den Ring (56) und den auskuppelbare oder unidirektionalen Kupplungsmechanismus (48) koppelnde Dauerkupplung (58) aufweist.

6. Elektrische Antriebseinheit nach dem vorhergehenden Anspruch, **dadurch gekennzeichnet, dass** die auskuppelbaren oder unidirektionalen Kupplungsmechanismen (48) der verschiedenen Kupplungssysteme (46.1 bis 46.4) im Wesentlichen die gleiche Dicke und den gleichen Innendurchmesser haben, der im Wesentlichen gleich dem Außendurchmesser der Hauptantriebswelle (42) ist.

7. Elektrische Antriebseinheit nach einem der vorhergehenden Ansprüche, **dadurch gekennzeichnet, dass** die elektrische Antriebseinheit (30) für jedes Kupplungssystem (46.1 bis 46.4) vordere und hintere Anschläge (70.1, 70.2) umfasst, die auf beiden Seiten des Kupplungssystems (46.1 bis 46.4) angeordnet sind, um das Kupplungssystem (46.1 bis 46.4) gegen Bewegungen in der Längsrichtung zu fixieren.

8. Elektrische Antriebseinheit nach dem vorhergehenden Anspruch, **dadurch gekennzeichnet, dass** für jedes betrachtete Kupplungssystem (46.1 bis 46.4) der vordere und der hintere Anschlag (70.1, 70.2) fest mit der sekundären Motorwelle (44.1 bis 44.4) verbunden sind, die mit dem betrachteten Kupplungssystem (46.1 bis 46.2) gekuppelt ist, wobei der vordere Anschlag (70.1), der dem Getriebesystem (36) am nächsten liegt, einer Schulter der sekundären Motorwelle (44.1 bis 44.4) entspricht, und der hintere Anschlag (70.2), der vom Getriebesystem (36) am weitesten entfernt ist, demontierbar ist.

9. Elektrische Antriebseinheit nach einem der vorhergehenden Ansprüche, **dadurch gekennzeichnet, dass** die verschiedenen Elektromotoren (34.1 bis 34.4) identische Rotoren (86) aufweisen und dass die elektrische Antriebseinheit für wenigstens einen gegebenen Elektromotor (34.1 bis 34.4) wenigstens eine radiale Verbindung (88) aufweist, die den Rotor (86) des gegebenen Elektromotors (34.1 bis 34.4) und die sekundäre Antriebswelle (44.1 bis 44.4), mit der der gegebene Elektromotor (34.1 bis 34.4) verbunden ist, verbindet.

10. Elektrische Antriebseinheit nach einem der vorhergehenden Ansprüche, **dadurch gekennzeichnet, dass** die elektrische Antriebseinheit (30) wenigstens ein Gehäuse (62) aufweist, in dem wenigstens ein Elektromotor (34, 34.1 bis 34.4) angeordnet ist, mit hinteren und vorderen Querwänden (64.1, 64.2), von denen jede wenigstens eine Öffnung (66) zur Aufnahme wenigstens einer sekundären Motorwelle (44.1 bis 44.4) aufweist, und dass die elektrische Antriebseinheit für jede hintere oder vordere Querwand (64.1, 64.2) ein Lager (68) aufweist, das in der Öffnung (66) aufgenommen ist und zwischen der hinteren oder vorderen Querwand (64.1, 64.2) und der sekundären Motorwelle (44.1 bis 44.4) angeordnet ist.

11. Luftfahrzeug mit wenigstens einer elektrischen Antriebseinheit nach einem der vorhergehenden Ansprüche.

## Claims

1. Electrical propulsion assembly including:
- a propeller (32) that has a rotation axis (A32),
- at least two electric motors (34, 34.1 to 34.4),
- a main drive shaft (42) parallel to the rotation axis (A32) of the propeller (32),
- a transmission system (36) configured to couple each electric motor (34, 34.1 to 34.4) to the propeller (32), including an output shaft (38) connected to the propeller (32) and an input shaft (38') connected to the main drive shaft (42);
the electric motors (34, 34.1 to 34.4) being coupled to the main drive shaft (42) and offset relative to one another in a longitudinal direction parallel to the rotation axis (A32) of the propeller (32), the electrical propulsion assembly comprising, for each electric motor (34, 34.1 to 34.4), a tubular secondary drive shaft (44, 44.1 to 44.4) connected to the electric motor (34, 34.1 to 34.4), coaxial and concentric with the main drive shaft (42), and a coupling system (46, 46.1 to 46.4) coupling the secondary drive shaft (44, 44.1 to 44.4) and the main drive shaft (42), the electrical propulsion assembly (30) including a rear secondary drive shaft (44.1) and a rear coupling system (46.1) farthest from the transmission system (36) and a front secondary drive shaft (44.4) and a front coupling system (46.4) nearest the transmission system (36), in that the secondary drive shafts (44.1 to 44.4), are coaxial and concentric;
the electric propulsion assembly being **characterized in that** each secondary drive shaft (44.1 to 44.4) has a substantially constant inside diameter, the secondary drive shafts (44.1 to 44.4) having inside diameters that increase from the front secondary drive shaft (44.4) to the rear secondary drive shaft (44.1), and **in that** each coupling system (46.1 to 46.4) has an exterior surface (50.1) connected to the corresponding secondary drive shaft (44.1 to 44.4) by a permanent coupling (52) and an inside surface (50.2) connected to the main drive shaft (42) by a permanent coupling (54), the coupling systems (46.1 to 46.4) each having a substantially constant thickness, the thicknesses of the coupling systems (46.1 to 46.4) increasing from the front coupling system (46.4) to the rear coupling system (46.1).

2. Electrical propulsion assembly according to the preceding claim **characterised in that** each coupling system (46, 46.1 to 46.4) includes at least one disengageable or unidirectional coupling mechanism (48) configured to occupy a first state in which the disengageable or unidirectional coupling mechanism (48) couples the secondary drive shaft (44, 44.1 to 44.4) and the main drive shaft (42) when the electric motor (34, 34.1 to 34.4) is driving the secondary drive shaft (44, 44.1 to 44.4) in rotation and a second state in which the disengageable or unidirectional coupling mechanism (48) decouples the secondary drive shaft (44, 44.1 to 44.4) and the main drive shaft (42) when the electric motor (34, 34.1 to 34.4) is not driving the secondary drive shaft (44, 44.1 to 44.4) in rotation.

3. Electrical propulsion assembly according to the preceding claim **characterised in that** each disengageable or unidirectional coupling mechanism (48) is of freewheel type to go automatically and autonomously from the first state to the second state.

4. Electrical propulsion assembly according to either one of claims 2 or 3 **characterised in that** the electrical propulsion assembly includes a lubrication system (80) configured to lubricate the disengageable or unidirectional coupling mechanisms (48).

5. Electrical propulsion assembly according to any one of the preceding claims **characterised in that** at least one coupling system (46.1 to 46.4) includes a disengageable or unidirectional coupling mechanism (48), a ring (56) concentric with the disengageable or unidirectional coupling mechanism (48) and a permanent coupling (58) coupling the ring (56) and the disengageable or unidirectional coupling mechanism (48).

6. Electrical propulsion assembly according to the preceding claim **characterised in that** the disengageable or unidirectional coupling mechanisms (48) of the various coupling systems (46.1 to 46.4) have substantially the same thickness and the same inside diameter substantially equal to the outside diameter of the main drive shaft (42).

7. Electrical propulsion assembly according to any one of the preceding claims **characterised in that** the electrical propulsion assembly (30) includes for each coupling system (46.1 to 46.4) front and rear abutments (70.1, 70.2) positioned on respective opposite sides of the coupling system (46.1 to 46.4) to immobilise the coupling system (46.1 to 46.4) against movement in translation in the longitudinal direction.

8. Electrical propulsion assembly according to the preceding claim **characterised in that**, for each coupling system (46.1 to 46.4) concerned, the front and rear abutments (70.1, 70.2) are secured to the secondary drive shaft (44.1 to 44.4) coupled to the coupling system (46.1 to 46.2) concerned, the front abutment (70.1) nearest the transmission system (36) corresponding to a shoulder on the secondary drive shaft (44.1 to 44.4), the rear abutment (70.2) farthest from the transmission system (36) being demountable.

9. Electrical propulsion assembly according to any one of the preceding claims **characterised in that** the various electric motors (34.1 to 34.4) have identical rotors (86) and **in that** the electrical propulsion assembly includes, for at least one given electric motor (34.1 to 34.4), at least one radial connection (88) connecting the rotor (86) of the given electric motor (34.1 to 34.4) and the secondary drive shaft (44.1 to 44.4) to which the given electric motor (34.1 to 34.4) is connected.

10. Electrical propulsion assembly according to any one of the preceding claims **characterised in that** the electrical propulsion assembly (30) includes at least one casing (62) in which at least one electric motor (34, 34.1 to 34.4) is positioned and having front and rear transverse walls (64.1, 64.2) each including at least one orifice (66) for accommodating at least one secondary drive shaft (44.1 to 44.4), and **in that** the electrical propulsion assembly includes, for each rear or front transverse wall (64.1, 64.2), a bearing (68) accommodated in the orifice (66) and inserted between the rear or front transverse wall (64.1, 64.2) and the secondary drive shaft (44.1 to 44.4).

11. Aircraft including at least one electrical propulsion assembly according to any one of the preceding claims.
